# EUROPÄISCHE PATENTANMELDUNG

(11) **EP 0 921 240 A2**
(43) Veröffentlichungstag der Anmeldung: **09.06.1999**
(21) Anmeldenummer: 98122926.3
(22) Anmeldetag: 03.12.1998
(51) Int. Cl.: E04B 1/58

(54) **Fachwerkstruktur**

(30) Priorität: 03.12.1997 DE 19753545
(71) Anmelder: Deutsches Zentrum für Luft- und Raumfahrt e.V., 53175 Bonn (DE)
(72) Erfinder: Schütze, Rainer, Dr., 38110 Braunschweig (DE); Götting, Hans-Christian, 38108 Braunschweig (DE)
(74) Vertreter: Einsel, Martin, Dipl.-Phys.

(57) **Zusammenfassung**

Bei einer Fachwerkstruktur mit zumindest einem ersten, insbesondere flachen Element (10) und zweiten Elementen (20,30) ist eine vollständige formschlüssige wieder lösbare Verbindung von erstem und zweiten Elementen (10,20,30) vorgesehen, wobei ein erstes (10) und zweite Elemente (20,30) verbindendes Gewindeelement (40) und Gewindemuttern (50) zum Festlegen des Gewindeelementes (40) vorgesehen sind.

## Beschreibung

Die Erfindung betrifft eine Fachwerkstruktur mit zumindest einem ersten, insbesondere flachen Element und zweiten Elementen.

Räumliche hochbelastete Fachwerkstrukturen sind bekannt, beispielsweise Triebwerksaufhängungen von Flugzeugen, bei denen Schweißkonstruktionen aus Stahl- und Titanrohren vorgesehen sind. Derartige Strukturen sind jedoch sehr aufwendig in der Fertigung, da die Schweißnähte mit aufwendigen Verfahren, beispielsweise dem Elektronenstrahlschweißen oder ähnlichen Verfahren, hergestellt werden. Im Anschluß an die Schweißvorgänge sind umfangreiche Qualitätskontrollen zur Sicherstellung der geforderten Qualität und Zuverlässigkeit erforderlich. Zudem weist eine metallische Fachwerkstruktur ein hohes Strukturgewicht auf, welches insbesondere im Flugzeug- und Raumfahrtbereich nicht wünschenswert ist.

Es ist ebenfalls bekannt, die metallischen Rohre einer derartigen Fachwerkstruktur durch Rohre aus Faserverbundwerkstoffen, insbesondere aus Kohlefaserverbundwerkstoffen, zu ersetzen. Es erweist sich jedoch als problematisch, die Rohre aus Faserverbundwerkstoffen miteinander zu verbinden, insbesondere dann, wenn die Fachwerkstruktur Spanten und Stäbe aufweist.

Bekannt sind auch fachwerkähnliche Konstruktionen zu anderen Zwecken, beispielsweise mit Knotenverbindern entsprechend dem DE 93 17 923 U1 oder dem DE 93 18 280 U1 oder dem DE 87 06 885 U1. Auch die DE 38 05 529 A1 und das DE 93 14 402 U1 schlagen Tragwerke vor, bei denen jeweils stabartige Elemente von mehreren Seiten in ein entsprechende Aufnahmeöffnungen aufweisendes zentrales Knotenverbindungselement gesteckt werden können. Meist dienen solche Konzeptionen dem Aufbau variabler Möbel oder von Messeständen. Für hochbelastete Strukturen etwa bei Triebwerksaufhängungen sind sie nicht gedacht und auch nicht geeignet, sie sind für mehr statische Belastungen vorgesehen, wie sie bei Möbeln typisch sind. Sie würden im Triebwerksbau wegbrechen, ausreißen und nicht standhalten. Würde man diese Konzeptionen stabiler machen, beispielsweise aus Metall aufbauen, entstünde zugleich das eingangs erwähnte Gewichtsproblem.

Der Erfindung liegt daher die Aufgabe zugrunde, eine Fachwerkstruktur so auszugestalten, daß sie ein geringes Strukturgewicht bei zugleich hoher Steifigkeit sowie statischer und dynamischer Festigkeit aufweist.

Die Aufgabe wird gelöst durch eine Fachwerkstruktur mit zumindest einem ersten, insbesondere flachen Element und zweiten Elementen, bei der eine vollständig formschlüssige wieder lösbare Verbindung von einem ersten und ein oder mehreren zweiten Elementen vorgesehen ist, bei der ein erstes und zwei oder mehr zweite Elemente verbindendes Gewindeelement und Gewindemuttern zum Festlegen des Gewindeelementes vorgesehen sind, bei der das Gewindeelement mit einem Ende innerhalb eines Endes eines der zweiten Elemente angeordnet ist, das erste Element durchdringt und mit einem anderen Ende innerhalb eines Endes eines anderen der zweiten Elemente angeordnet ist. Weiterbildungen der Erfindung sind in den Unteransprüchen definiert.

Dadurch wird eine Fachwerkstruktur geschaffen, die im Vergleich zu bekannten Fachwerkstrukturen aus Metall ein geringes Strukturgewicht bei hoher Steifigkeit und Festigkeit aufweist. Zudem ist der Fertigungs- und Qualitätssicherungsaufwand sehr gering und die Fachwerkstruktur ist demontierbar, wodurch ein einfacher Austausch einzelner zweiter Elemente, insbesondere in Form von Stäben ermöglicht wird. Beispielsweise können dadurch anstelle der passiven Stäbe auch aktive Stäbe eingebaut werden, um beispielsweise störende Schwingungen innerhalb der Fachwerkstruktur zu unterdrücken. Besonders bevorzugt ist es, einzelne Stäbe als aktive Stäbe auszubilden, innerhalb derer ein in Achsrichtung wirkendes aktiv steuerbares druckerzeugendes Element vorgesehen ist, beispielsweise ein Piezoelement oder ein Element aus einer Legierung mit Formgedächtnismaterial.

Besonders vorteilhaft erweist es sich bei der erfindungsgemäßen Fachwerkstruktur, daß völlig auf die Verwendung jeglicher Klebungen verzichtet wird. Vielmehr geschieht eine vollständig formschlüssige und dadurch hochbelastbare Verbindung von bevorzugt Kohlefaserverbundwerkstoff-Spanten mit Kohlefaserverbundwerkstoff-Stäben. Im Unterschied zu Klebeverbindungen, welche durch Reibschluß wirken und im speziellen Fall nur unzulänglich kontrolliert werden können, sind formschlüssige Verbindungen höher belastbar und leichter zu definieren. Als erste Elemente, insbesondere als Spanten werden vorzugsweise im wesentlichen ebene Rahmenteile verwendet, welche zumindest für Biegemomente senkrecht zur Ebene steif sind und in Richtung der Rahmenteile ebenfalls Längssteifigkeit aufweisen. Vorzugsweise werden die Rahmenteile an denjenigen Knotenpunkten der Fachwerkstruktur, an denen die Stäbe als zweite Elemente befestigt werden sollen, mit einer Bohrung oder allgemein einer Durchgangsöffnung versehen. Diese ist vorzugsweise so dimensioniert, daß ein Gewindeelement hindurchgeführt werden kann. Ein solches Gewindeelement kann beispielsweise ein Gewindestift sein.

Derartige Spanten können beispielsweise aus einem Kohlefaserverbundwerkstoff-Gewebelaminat-Sandwich bestehen. Bevorzugt weist das Sandwich an den Stellen der Durchgangsöffnungen für die Gewindeelemente, insbesondere Gewindestifte, Füllklotzelemente als Verstärkung auf. Diese bestehen vorzugsweise ebenfalls aus Kohlefaserverbundwerkstoff-Gewebelaminaten.

Besonders bevorzugt werden die Gewindeelemente, insbesondere Gewindestifte, im Spant als erstem Element durch zwei Gewindemuttern örtlich festgelegt. Mittels der Gewindemuttern ist ebenfalls eine Längenvariation der Stäbe als zweiten Elementen in einer bestimmten Variationsbreite möglich. Die konischen oder abgerundeten bzw. kugeligen Gewindemuttern sind am Ende der Stäbe vorzugsweise so angeordnet, daß die schmale Endfläche gegen die jeweilige Außenfläche des Spantes neben der Durchgangsöffnung für den Gewindestift drückt.

Nachdem eine Längeneinstellung der Stäbe vermittels der Gewindemuttern erfolgt ist, kann vorzugsweise zwischen den Gewindemuttern und den SpantAußenflächen eine jeweilige Faserringwicklung zum Fixieren der Anordnung angeordnet werden. Besonders bevorzugt werden zwischen dem ersten Element und den zweiten Elementen die Gewindemuttern von Verbindungsrohrelementen überdeckt. Der zwischen Faserringwicklung, Gewindemutter, Spant-Außenfläche und Innenseite des Verbindungsrohrelementes verbleibende Hohlraum wird vorzugsweise mit Harz verfüllt.

Besonders bevorzugt sind die Gewindeelemente, insbesondere Gewindestifte gebogen geformt. Dies erweist sich gerade bei räumlichen Fachwerkstrukturen als besonders vorteilhaft. Die Stäbe können über formschlüssig integrierte Krafteinleitungselemente, welche vorzugsweise am Ende der Stäbe angeordnet sind, an die Gewindestifte angeschlossen werden. Festigkeitsuntersuchungen zeigen, daß Stäbe aus Kohlefaserverbundwerkstoff mit solchen Krafteinleitungselementen geeignet sind, sehr hohe Längskräfte aufzunehmen. Insbesondere zeichnen sich diese Stäbe durch eine hohe Ermüdungsfestigkeit aus, welche wesentlich höher ist als die von metallischen Rohren. Es ist daher verständlich, daß die schwächsten Glieder in der erfindungsgemäßen Struktur des räumlichen Fachwerkes, die aus vorzugsweise Metall bestehenden Gewindestifte sind. Um auch hier keine Ermüdungsbruchprobleme auftreten zu lassen, ist es vorzugsweise möglich, die Querschnitte der Gewindestifte entsprechend groß zu wählen, ohne daß dabei eine wesentliche Zunahme des Gesamtgewichtes der Fachwerkstruktur zu verzeichnen wäre. Der erfindungsgemäße Vorzug der leichtbaugerechten Struktur bleibt daher unverändert erhalten.

Die vorzugsweise am Ende der Stäbe integrierten Krafteinleitungselemente sind systembedingt mit einer Zuglast vorbelastet, welche höher ist als die höchste Betriebslast. Dabei kann vorteilhaft auch eine entsprechende Druckbelastbarkeit der Stäbe erfolgen, um eine vollständige Überprüfung aller Stäbe vorzunehmen. Der Fertigungs- und Qualitätssicherungsaufwand der Stäbe sowie der Spanten ist somit verhältnismäßig gering.

Besonders bevorzugt wird die erfindungsgemäße Fachwerkstruktur für eine Triebwerksaufhängung eines Flugzeuges verwendet.

Zur näheren Erläuterung der Erfindung wird im folgenden ein Ausführungsbeispiel anhand der Zeichnungen beschrieben.

Diese zeigen in:
- **Figur 1**: eine Schnittansicht durch eine erfindungsgemäße Fachwerkstruktur,
- **Figur 2**: eine Detail-Schnittansicht durch einezweite Ausführungsform oder einer erfindungsgemäßen Fachwerkstruktur und

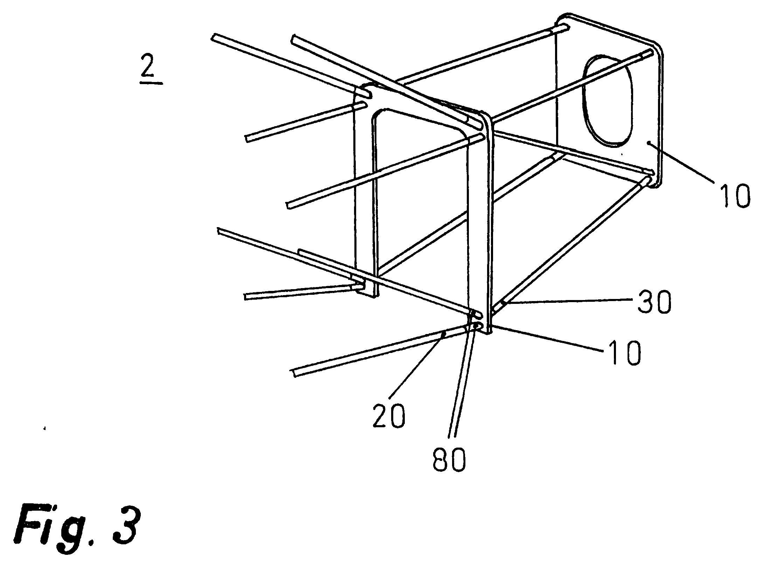

- **Figur 3**: eine perspektivische Ansicht einer Ausführungsform einer Fachwerkstruktur als Triebwerksaufhängung für ein Flugzeug.

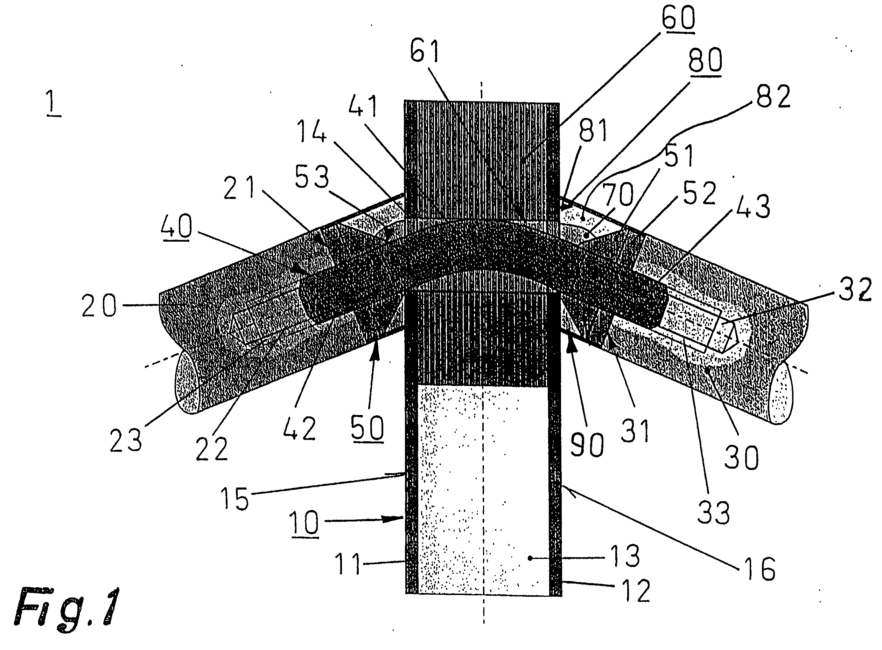

In **Figur 1** ist eine Schnittansicht einer erfindungsgemäßen Fachwerkstruktur 1 mit einem ersten und zwei zweiten Elementen dargestellt. Mittig zwischen zwei Stäben 20, 30 ist ein Spant 10 angeordnet. Die beiden Stäbe 20, 30 sind jeweils in einem Winkel zu dem senkrechten Spant angeordnet.

Der Spant ist als Sandwichstruktur aufgebaut. Er weist eine erste Deckschicht 11, ein Kernelement 13 sowie eine zweite Deckschicht 12 auf. Zum Verbinden mit den beiden Stäben ist eine Durchgangsöffnung 14 in dem Spant 10 vorgesehen. Im Bereich der Durchgangsöffnung ist in den Spant ein Füllklotzelement 60 eingefügt. Dieses weist im Bereich der Durchgangsöffnung 14 ebenfalls eine Durchgangsöffnung 61 auf.

Die beiden Stäbe 20, 30 sind im Bereich ihrer Stabenden 21, mit Gewindeanschlüssen versehen. Beispielsweise können sie, ebenso wie der Spant 10, aus einem Faserverbundwerkstoff, insbesondere aus CFK (Kohlefaserverbundwerkstoff) bestehen.

In die Stabenden 21, 31 sind in Längsrichtung der Stäbe Innenbohrungen 22, 32 eingebracht. Die Innenbohrungen weisen jeweils ein Innengewinde 23, 33 auf. Das Innengewinde dient zum schraubenden Einfügen eines Gewindeelementes 40 in Form eines gebogenen Gewindestiftes.

Dieser weist ein gekrümmtes Mittelstück 41 auf. Das gekrümmte Mittelstück 41 lagert in der Durchgangsöffnung 61 des Füllklotzelementes. Der Bereich der maximalen Krümmung liegt vorzugsweise im Bereich der Mittelsenkrechten durch den Spant. Im Anschluß an das gekrümmte Mittelstück 41 weist der gebogene Gewindestift zwei Gewinde-Endstücke 42, 43 auf. Auf die Gewindeendstücke ist jeweils eine Gewindemutter 50 aufgeschraubt. Die Gewindemutter ist konisch, d.h. sie weist ein konusförmiges Teilstück 51 sowie ein zylindrisches Teilstück 52 auf. Das zylindrische Teilstück 52 lagert am jeweiligen Stabende 21 bzw. 31 an. Das jeweilige schmale Konusende im Bereich seiner Konusendfläche 53 lagert hingegen gegen die Außenflächen 15, 16 des Spantes 10 an. Die konusförmige Gewindemutter 50 wird dabei jeweils so fest angezogen, daß das Gewindeelement in Form des gebogenen Gewindestiftes 40 rutschsicher in dem Spant festgelegt ist. Die beiden Stäbe 20, 30 werden auf die jeweiligen Gewindeendstücke 42, 43 des Gewindeelementes nachfolgend aufgeschraubt.

Zum Verhindern eines ungewollten Lösens der Gewindemuttern 50 von den Gewindeendstücken 42, 43 des Gewindeelementes 40 sowie zum Ausfüllen eines verbleibenden keilförmigen Zwischenraumes 90 sind die konusförmigen Teilstücke 51 jeweils in ihrem Endbereich von einer Faserringwicklung 70 umwickelt. Diese lagert direkt an den Außenflächen 15, 16 des Spantes im Bereich der Durchgangsöffnung 14 des Spantes 10 an.

Um die Verbindung zwischen Spant und Stäben zu verkleiden und ggf. einen Schutz gegen eindringende Feuchtigkeit oder Beschädigung zu erhalten, ist ein jeweiliges Verbindungsrohrelement 80 zwischen Stabenden 21, 31 und Außenfläche 15, 16 des Spantes eingefügt. Das jeweilige Verbindungsrohrelement 80 ummantelt die beiden Gewindemuttern 50 von außen, wobei es im Bereich des zylindrischen Teilstückes 52 der beiden Gewindemuttern 50 direkt an diesem anliegt. Seine Formgebung ist an den jeweiligen Einzelfall angepaßt. Vorzugsweise kann der innere Hohlraum zwischen der Innenfläche 81 der Verbindungsrohrelemente 80 sowie der Faserringwicklung 70 und den jeweiligen konusförmigen Teilstücken 51 mit einer Harzverfüllung 82 verfüllt sein.

Gewindestift und Gewindemuttern bestehen vorzugsweise aus Metall, insbesondere aus Stahl und Titan. Anstelle eines gebogenen Gewindestiftes kann, je nach Anwendungsfall, auch ein gerader Gewindestift vorgesehen sein. In diesem Fall wäre der Anschluß der äußeren Stäbe an den Spant rechtwinklig.

Alternativ zu Spant und Stäben können aber auch andere erste und zweite Elemente vorteilhaft mit dem erfindungsgemäßen Aufbau verbunden werden.

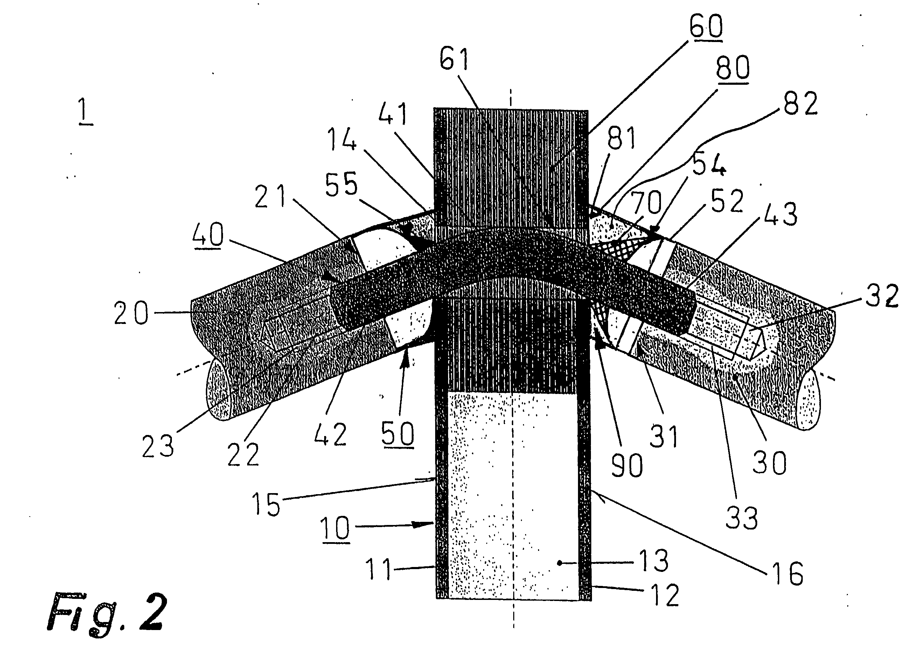

Anstelle der konusförmigen Gewindemuttern können auch halbkugelförmige oder zylinderförmige mit gerundeten vorderen Kanten verwendet werden, wie sie in **Figur 2** dargestellt sind. Derartige Gewindemuttern weisen dabei ein gerundetes Teilstück 54 anstelle des konusförmigen 51 auf. Das jeweilige halbkugelförmige oder gerundete Teilstück 54 weist ebenfalls eine vergleichsweise schmale Endfläche 55 auf, welche an der jeweiligen Außenfläche 15, 16 des Spantes anlagert.

Besonders geeignet ist die Verwendung des erfindungsgemäßen Aufbaus bei einer Triebwerksaufhängung für ein Flugzeug, wie sie beispielhaft perspektivisch in **Figur 2** dargestellt ist.

Die Triebwerksaufhängung 2 weist mehrere Spanten 10 auf. Diese sind fachwerkgerecht durch Stäbe 20, 30 miteinander verbunden. Jeweils im Anschlußbereich der Stäbe an die Spanten, welche flache Rahmenteile sind, kann die erfindungsgemäße Verbindungsmöglichkeit über Gewindestifte mit Gewindemuttern sowie Faserringwicklungen und Verbindungsrohrelementen genutzt werden.

### Bezugszeichenliste

- 1: Fachwerkstruktur
- 2: Triebwerksaufhängung
- 10: Spant
- 11: erste Deckschicht
- 12: zweite Deckschicht
- 13: Kernelement
- 14: Durchgangsöffnung
- 15: Außenfläche
- 16: Außenfläche
- 20: Stab
- 21: Stabende
- 22: Innenbohrung
- 23: Innengewinde
- 30: Stab
- 31: Stabende
- 32: Innenbohrung
- 33: Innengewinde
- 40: Gewindeelement / gebogener Gewindestift
- 41: gekrümmtes Mittelstück
- 42: Gewinde-Endstück
- 43: Gewinde-Endstück
- 50: Gewindemutter
- 51: konusförmiges Teilstück
- 52: zylindrisches Teilstück
- 53: schmale Konusendfläche
- 54: gerundetes Teilstück
- 55: schmale Endfläche
- 60: Füllklotzelement
- 61: Durchgangsöffnung
- 70: Faserringwicklung
- 80: Verbindungsrohrelement
- 81: Innenfläche
- 82: Harzverfüllung
- 90: keilförmiger Zwischenraum

## Patentansprüche

1. Fachwerkstruktur mit zumindest einem ersten, insbesondere flachen Element und zweiten Elementen,
- bei der eine vollständig formschlüssige wieder lösbare Verbindung von einem ersten und ein oder mehreren zweiten Elementen (10, 20, 30) vorgesehen ist,
- bei der ein erstes und zwei oder mehr zweite Elemente verbindendes Gewindeelement (40) und Gewindemuttern (50) zum Festlegen des Gewindeelementes (40) vorgesehen sind,
- bei der das Gewindeelement (40) mit einem Ende (42) innerhalb eines Endes (21) eines der zweiten Elemente (20) angeordnet ist, das erste Element (10) durchdringt und mit einem anderen Ende (43) innerhalb eines Endes (31) einen anderen der zweiten Elemente (30) angeordnet ist.

2. Fachwerkstruktur nach Anspruch 1,
**dadurch gekennzeichnet,**
**daß** das Gewindeelement (40) in die Enden (21, 31) eingeschraubt ist.

3. Fachwerkstruktur nach Anspruch 1 oder 2,
**dadurch gekennzeichnet,**
**daß** das erste Element (10) zum Verbinden mit den zweiten Elementen (20, 30) eine jeweilige Durchgangsöffnung (14) aufweist, die so dimensioniert ist, daß das Gewindeelement (40) hindurchführbar ist.

4. Fachwerkstruktur nach Anspruch 3,
**dadurch gekennzeichnet,**
**daß** in dem ersten Element (10) im Bereich der Durchgangsöffnung (14) ein oder mehrere Füllklotzelemente (60) einfügbar und/oder eingefügt sind.

5. Fachwerkstruktur nach einem der vorstehenden Ansprüche,
**dadurch gekennzeichnet,**
**daß** die Gewindemuttern (50) konische, kegelförmige, halbkugelförmige oder abgerundete zylinderähnliche Elemente sind.

6. Fachwerkstruktur nach Anspruch 5,
**dadurch gekennzeichnet,**
**daß** das Gewindeelement durch die konischen Gewindemuttern in dem ersten Element festlegbar ist, wobei die Gewindemuttern so am Ende der zweiten Elemente angeordnet sind, daß die schmalen Konusendflächen (53) oder Kugel- bzw. abgerundeten Endflächen der Mutter gegen eine Außenfläche (15, 16) des ersten Elementes (10) neben der Durchgangsöffnung drücken.

7. Fachwerkstruktur nach einem der vorstehenden Ansprüche,
**dadurch gekennzeichnet,**
**daß** eine jeweilige Faserringwicklung (70) zum Fixieren von Längeneinstellungen der zweiten Elemente durch die Gewindemuttern (50) zwischen den Gewindemuttern und dem ersten Element angeordnet ist.

8. Fachwerkstruktur nach einem der vorstehenden Ansprüche,
**dadurch gekennzeichnet,**
**daß** zwischen erstem und und zweiten Elementen, die Gewindemuttern überdeckend, Verbindungsrohrelemente (80) angeordnet sind.

9. Fachwerkstruktur nach einem der vorstehenden Ansprüche,
**dadurch gekennzeichnet,**
**daß** das Gewindeelement (40) winklig gebogen geformt ist.

10. Fachwerkstruktur nach einem der vorstehenden Ansprüche,
**dadurch gekennzeichnet,**
**daß** die Gewindeelemente in formschlüssig in den Enden der zweiten Elemente (20, 30) integrierten Krafteinleitungselementen eingefügt oder eingeschraubt sind.

11. Fachwerkstruktur nach einem der vorstehenden Ansprüche,
**dadurch gekennzeichnet,**
**daß** das erste Element ein Spant und die zweiten Elemente Stäbe sind, wobei Spant und Stäbe aus Faserverbundwerkstoff, insbesondere Kohlefaserverbundwerkstoff, bestehen.

12. Fachwerkstruktur nach Anspruch 11,
**dadurch gekennzeichnet,**
**daß** der Spant (10) eine Faserverbund-Gewebelaminat-Sandwichplatte, insbesondere eine Kohlefaserverbund-Gewebelaminat-Sandwichplatte, aufweist.

13. Fachwerkstruktur nach einem der Ansprüche 4 bis 12,
**dadurch gekennzeichnet,**
**daß** die Füllklotzelemente (60) aus einem Faserverbund-Gewebelaminat, insbesondere Kohlefaserverbund-Gewebelaminat, bestehen.

14. Fachwerkstruktur nach einem der vorstehenden Ansprüche,
**dadurch gekennzeichnet,**
**daß** zumindest ein Teil der Stäbe (20, 30) aktive Stäbe sind, innerhalb derer ein in Achsrichtung wirkendes aktiv steuerbares druckerzeugendes Element, insbesondere ein piezoelektrisches oder ein Element aus einer Legierung aus Formgedächtnismaterial, vorgesehen ist.

15. Fachwerkstruktur nach einem der vorstehenden Ansprüche,
**dadurch gekennzeichnet,**
**daß** die Fachwerkstruktur eine Triebwerksaufhängung (2) eines Flugzeuges ist.
